# EUROPÄISCHE PATENTSCHRIFT

(11) **EP 1 027 389 B1**
(45) Veröffentlichungstag und Bekanntmachung des Hinweises auf die Patenterteilung: **18.09.2002**
(21) Anmeldenummer: 98956887.8
(22) Anmeldetag: 28.10.1998
(51) Int. Cl.: C09D 5/03, B29B 17/00, C08J 11/00

(54) **KONTINUIERLICHES VERFAHREN ZUR WIEDERVERWENDUNG VON PULVERLACKABFÄLLEN UND DIE ERHALTENEN PULVERLACKE**
CONTINUOUS METHOD FOR REUSING COATING POWDER WASTE AND COATING POWDERS THUS OBTAINED
PROCEDE EN CONTINU POUR LE RECYCLAGE DE DECHETS DE POUDRE DE REVETEMENT ET POUDRES DE REVETEMENT AINSI OBTENUES

(30) Priorität: 31.10.1997 DE 19748159
(43) Veröffentlichungstag der Anmeldung: 16.08.2000
(73) Patentinhaber: E.I. Dupont de Nemours and Company, Inc., Wilmington, DE 19898 (US)
(72) Erfinder: BLATTER, Karsten, D-50374 Erftstadt (DE); MONTGOMERY, David, D-50997 Köln (DE); BOLM, Helene, S-59336 Västervik (SE)
(74) Vertreter: Gille Hrabal Struck Neidlein Prop Roos
(86) Internationale Anmeldenummer: EP9806843
(87) Internationale Veröffentlichungsnummer: WO99023176

(56) Entgegenhaltungen:
- EP-A- 0 636 422
- WO-A-95/34606
- WO-A-96/15891
- PATENT ABSTRACTS OF JAPAN vol. 098, no. 002, 30. Januar 1998 & JP 09 276754 A (TSUTSUI KOGYO KK), 28. Oktober 1997

## Beschreibung

Die Erfindung betrifft ein Verfahren zur kontinuierlichen Autbereitung und Wiederverwendung von vermahlenen Pulverlackabfällen, bei denen es sich im wesentlichen um Nebenprodukte bei der Pulverlackherstellung handelt, zur Herstellung von Pulverlacken ohne Qualitätsverlust.

Vernetzbare Pulverlacke stellen eine umweltfreundliche Alternative zu lösungsmittelhaltigen Flüssiglacksystemen dar, da bei der Applikation keine Lösungsmittelemissionen auftreten. Der Einsatz von Pulverlacken hat aus diesem Grund in den letzten Jahren stark zugenommen.

Vernetzbare Pulverlacke bestehen üblicherweise aus einem oder mehreren polymeren Bindemitteln, Härtern, Pigmenten und Füllstoffen sowie Additiven. Die Herstellung eines Pulverlacks läßt sich in folgende Verfahrensschritte aufteilen:
1. Die Bestandteile des Pulverlacks werden als Feststoffe in den erforderlichen Mengenverhältnissen trocken intensiv vorgemischt.
2. Die Mischung wird in einem Extruder bei möglichst niedriger Temperatur zur Vermeidung einer vorzeitigen Vernetzung aufgeschmolzen und intensiv durchmischt. Dabei werden Bindemittel und Härter plastifiziert und benetzen die Pigmente und Füllstoffe.
3. Das erhaltene, gegebenenfalls gefärbte Extrudat wird in eine dünne Schicht ausgewalzt, abgekühlt und in ein grobes Granulat gebrochen.
4. Das Granulat wird in einer Mühle zum fertigen Pulverlack vermahlen.

In der Regel wird der im Mahlprozeß nicht vermeidbare Feinanteil mit Partikelgrößen < 10 µm in einem anschließenden Sichtungsprozeß entfernt. Das erhaltene Pulver hat typischerweise eine mittlere Partikelgröße von 40 bis 70 µm.

Die Herstellung von Pulverlacken erfolgt in der Regel chargenweise. Übliche Zusammensetzungen sowie das klassische Herstellungsverfahren für Pulverlacke sind beispielsweise in der Monographie "The Science of powder coatings" Volume 1 und 2 (Herausgeber D.A. Bate, London 1990) beschrieben.

Ziel des Mahlprozesses ist die Herstellung eines Pulvers mit einer engen Partikelgrößenverteilung und einem möglichst geringen Feinanteil, da sich ein hoher Feinanteil negativ auf die Verarbeitbarkeit des Pulverlackes im elektrostatischen Sprühverfahren auswirkt. In der Regel wird daher der Feinanteil mit Partikelgrößen unter 10 µm durch geeignete Verfahren, z.B. mit Hilfe eines Zyklons, abgetrennt. Dieser Feinanteil beträgt üblicherweise ca. 2 bis 5 Gew.-%. Wird die mittlere Partikelgröße des Pulvers verkleinert, was aus technischer Sicht häufig bevorzugt wird, so steigt der Feinanteil mit Partikelgrößen < 10 µm stark an, da im Mahlprozeß immer eine relativ breite Partikelgrößenverteilung erhalten wird.

Pulverlacke mit einer niedrigen mittleren Partikelgröße und einer engen Verteilung des Kornspektrums sind beispielsweise für die Herstellung dünner Lackschichten wünschenswert (B. Fawer, Powder Coating, October 1996, S. 56).

Der Feinanteil aus dem Mahlprozeß stellt somit ein Nebenprodukt der Pulverlackherstellung dar, das in vielen Fällen als industrieller Abfall entsorgt werden muß.

In der DE 4028567 A1 wird die Rückführung des bei der Anwendung von Pulverlacken anfallenden Oversprays und dessen Vermischung mit den Ausgangsmaterialien für eine neue Pulverlackcharge beschrieben. Dort wird dann diese Mischung über die üblichen Extruder weiterverarbeitet. Dabei werden die Bestandteile, insbesondere auch der Overspray, thermisch aufgeschmolzen und belastet. Dieses Verfahren hat den Nachteil, daß die homogene Vermischung aufgrund der geringen Partikelgröße des Oversprays schwierig ist, es zu Problemen mit dem Einzug der Mischungen in den Extruder kommt und gegebenenfalls Anteile des entstehenden Pulverlackes mehrfach thermisch belastet werden.

Die WO 96/15891 beschreibt ein Verfahren, welches das Problem der Dosierung und Zuführung von Feinanteil umgeht, indem das Feinpulver in einer Tablettenpresse kompaktiert wird. Die erhaltenen Tabletten werden dann mit den übrigen Ausgangsstoffen für eine neue Pulverlackcharge vermischt und in den Extruder eingeführt. Als eine wesentliche Bedingung für die Kompaktierung wird festgestellt, daß die ursprünglichen Partikel in den Tabletten "im wesentlichen noch erkennbar" sein müssen.

Die EP 0 683 199 A2 beschreibt ein Verfahren zur Rückführung von Feinanteilen in die Ausgangsmischung bei der Pulverlackherstellung vor dem Extrusionsschritt durch thermisches Zusammensintern des Pulvers, indem die Feinanteile auf einer Fläche verteilt, dort zusammengebacken werden, und dann als größere Partikel der Ausgangsmischung in geeigneter Menge zudosiert werden können.

Allen diesen bekannten Verfahren ist gemeinsam, daß die Rückführung des Feinanteils oder der Pulverreste in den ersten Schritt der Pulverlackherstellung erfolgt. Das Material muß den gesamten Pulverlackproduktionsprozeß erneut durchlaufen. Diese Vorgehensweise hat den prinzipiellen Nachteil, daß das Material im Extruder erneut aufgeschmolzen und thermisch belastet wird. Da es sich bei Pulverlacken in vielen Fällen um thermisch vernetzende Systeme handelt, führt eine wiederholte Extrusion zu Qualitätsverlusten im Pulverlack, besonders wenn ein hoher Anteil an Feinanteil eingesetzt wird.

Gemäß DE-C 19703376 wird ein Verfahren zur Wiederverwendung von Feingut-Pulverlackresten beansprucht, bei dem die Pulverlackreste agglomerisiert werden und dem Herstellungsprozeß von Pulverlacken zurückgeführt werden. Es kann dabei gegebenenfalls auf den Extrusionsschritt verzichtet werden und eine direkte Vermahlung zu wieder einsetzbaren Pulverlacken erfolgen.

Durch die in DE-C 19703376 beschriebene chargenweise Aulbereitung können die bekannten logistischen Probleme bezüglich der erforderlichen Lagerungs- und Transportbedingungen auftreten. Das beispielsweise aus Overspray-Resten hergestellte Pulverlackagglomerat wird in der Regel durch den Pulverlackanwender einem Pulverlackhersteller zur Wiederverwendung zur Verfügung gestellt.

Aufgabe der vorliegenden Erfindung ist daher die Bereitstellung eines vereinfachten Verfahrens zur Aufbereitung von vermahlenen Pulverlackabfällen, das deren Wiederverwertung ermöglicht und die genannten logistischen Probleme vermeidet. Das Verfahren soll zu einem homogenen, in der Qualität unverminderten Pulverlack führen.

Es wurde gefunden, daß diese Aufgabe gelöst werden kann durch das einen Gegenstand der Erfindung darstellende Verfahren zur Aufbereitung von Pulverlackabfällen durch Kompaktieren der Pulverlackabfälle ohne völliges Aufschmelzen zu einem zusammengesinterten Produkt, wobei die Pulverlackabfälle im Pulverproduktionsprozeß im Anschluß an den Vermahlungsschritt kontinuierlich abgetrennt, kontinuierlich kompaktiert, gegebenenfalls gebrochen und kontinuierlich zusammen mit frischem Mahlgut der gleichen Pulverlack-Charge ohne Extrusionsbehandlung zu einem Pulverlack vermahlen werden.

Einen weiteren Gegenstand der Erfindung bilden die beim erfindungsgemäßen Verfahren erhältlichen Pulverlacke.

Gemäß dem erfindungsgemäßen Verfahren wird Pulverlackabfall, insbesondere der im Mahlprozeß entstehende Feinanteil, kontinuierlich, z.B. mit Hilfe eines Zyklons oder eines Filters, abgetrennt, direkt kompaktiert und das kompaktierte Produkt wieder der Mühle, bevorzugt zusammen mit dem Original-Grobgranulat der gleichen Charge, zugeführt.

Diese Vorgehensweise hat den Vorteil, daß der Feinanteil wieder direkt in die gleiche Charge eingearbeitet wird. Es treten daher keinerlei Probleme mit Farbabweichungen auf und die bekannten logistischen Probleme einer diskontinuierlichen Arbeitsweise werden vermieden.

Die kontinuierliche Arbeitsweise ermöglicht darüber hinaus, den Pulverlackabfall in einem geschlossenen System zu halten. Insbesondere bei Verwendung des Feinanteils ist dies aus Gründen der Arbeitshygiene und der Qualitätssicherung vorteilhaft. Die in DE-C 19703376 beschriebenen Probleme mit der Förderung des Feinanteils, beispielsweise in Rohrleitungen, werden ebenfalls vermieden.

Das erfindungsgemäße Verfahren ist daher besonders für die kontinuierliche Herstellung von Pulverlacken mit geringer mittlerer Teilchengröße und enger Verteilung besonders vorteilhaft, da dabei große Mengen an Feinanteil anfallen, die direkt wiederverwendet werden können.

Beispielsweise ist es möglich, einen Pulverlack mit einer mittleren Partikelgröße (d 50) von 30 µm herzustellen, der nach dem Sichtungsvorgang einen Feinanteil < 10 µm von weniger als 15 %, insbesondere weniger als 10 % besitzt, ohne daß signifikante Mengen (< 2 %) an Feinpulver anfallen.

Ohne Einsatz des erfindungsgemäßen Verfahrens müssen zur Erzielung einer solchen Partikelgrößenverteilung ca. 12 % Feinpulver < 10 µm abgetrennt und entsorgt oder aufwendig bei der Herstellung einer neuen Charge des gleichen Produktes wieder in den Extruder eingearbeitet werden. Die kontinuierliche Kompaktierung des Feinanteils erlaubt also eine erhebliche Einsparung von Rohstoffen, da in diesem Beispiel für eine gegebene Menge Pulverlack ca. 10 % weniger Mahlgut durch Extrusion hergestellt werden müssen. Es ist möglich, auch Pulver mit einer mittleren Partikelgröße < 30 µm, beispielsweise 20 bis 25 µm, herzustellen. Dabei steigt die Menge des zu kompaktierenden Feinanteils stark an, was zu einem höheren Durchsatz und Energiebedarf im Kompaktierappart führt, aber keinen negativen Einfluß auf die Qualität des Pulverlackes hat.

Das erfindungsgemäße Verfahren kann für beliebige Pulverlacke eingesetzt werden, z.B. für Pulverklarlacke oder für farbige Pulverlacke, beispielsweise auf der Basis von Epoxid-, Polyester-, Polyurethan- oder Acrylatharzen.

Die Kompaktierbedingungen können abhängig vom eingesetzten Pulverlacktyp gewählt werden. Ist die Kompaktierung schwach, wie dies beispielsweise beim Verfahren bei der Herstellung von Tabletten analog zu der WO 96/15891 beabsichtigt ist, so zerfällt das kompaktierte Material in der Mühle wieder in das eingesetzte Feinpulver. Wird das Material zu stark kompaktiert, so kommt es zu einer starken Aufwärmung durch die Reibungshitze, die zu einem weitgehenden Aufschmelzen des Pulvers führt. Das geschmolzene Pulver haftet stark an den Kompaktiervorrichtungen und läßt sich nur mit hohem Aufwand wieder entfernen. Außerdem ist die thermische Belastung sehr hoch, so daß eine Qualitätsbeeinträchtigung der entstehenden Pulverlacke möglich ist. Die Kompaktierung soll nach dem erfindungsgemäßen Verfahren so erfolgen, daß ein Zusammensintern der Feinanteile erfolgt ohne völliges Aufschmelzen der Pulverkörner erfolgt, und daß die gesinterten Teile beim Vermahlen in neue Kornstrukturen aufgebrochen werden.

Die optimalen Kompaktierbedingungen hängen sowohl vom eingesetzten Pulverlack als auch von der Kompaktiervorrichtung ab. Bei der Kompaktierung entsteht an der Oberfläche der Walzpressen eine erhöhte Temperatur, die zum Sintern oder Verbacken der Pulverkörner führt. Im Fall bei niedriger Temperatur vernetzenden Pulverlacken kann z.B. die Verarbeitungskraft so eingestellt werden, daß die einzelnen Pulverkörner gut zusammensintern aber nicht aufschmelzen. Für bei höheren Temperaturen vernetzende Puverlacke kann z.B. die Kraft und damit auch die sich ergebende Temperatur höher eingestellt werden. Gegebenenfalls ist es möglich die Kompaktiervorrichtungen auch mit einer externen Heizung oder Kühlung zu versehen, z.B. können die Walzen mit Wasser gekühlt werden.

Grundsätzlich sind alle bekannten Kompaktiervorrichtungen wie Kolbenpressen, Kolbenstrangpressen, insbesondere Zweiwalzenpressen oder Ringwalzenpressen für das erfindungsgemäße Verfahren geeignet. Dabei wird die Preßkraft bei den Walzenpressen einerseits durch den Spalt, durch die Umdrehungsgeschwindigkeit und die zugeführte Materialmenge bestimmt. Die Parameter können gut aufeinander abgestimmt werden. Die Preßkraft wird als spezifische Preßkraft angegeben, als N pro cm Walzenbreite. Im allgemeinen soll die spezifische Preßkraft oberhalb von 4 kN/cm liegen, insbesondere ist ein Wert von über 6 kN/cm günstig. Beispielsweise liegen die spezifischen Preßkräfte im Bereich von 10 bis über 30 kN/cm und bis zu 100 kN/cm. Eine zu hohe Preßkraft ist am weitgehenden Aufschmelzen der Pulver zu erkennen, d.h. die Masse zieht Fäden und klebt an den Walzen. Zu niedrige Preßkräfte führen zu einem stark erhöhten Feinanteil im Mahlprozeß. Zweiwalzenpressen mit strukturierten Oberflächen haben sich als besonders geeignet erwiesen, solche mit tablettenförmigen Vertiefungen sind weniger geeignet als entsprechende mit geriffelter Oberfläche.

Falls beim Kompaktieren ein Produkt erhalten wird, das aufgrund seiner Abmessungen nicht für einen Mahlvorgang geeignet ist, kann das Produkt gebrochen werden, z.B. unter Bildung von Chips oder Granulaten. Das Brechen kann mit üblichen zur Pulverlackherstellung verwendbaren Vorrichtungen durchgeführt werden. z.B. mit sogenannten Fingerbrechern.

Das kompaktierte Produkt wird kontinuierlich zusammen mit frischem Mahlgut in die für Pulverlack üblichen Zerkleinerungsapparate zurückgeführt, wie z.B. Prallmühlen oder Sichtermühlen, die eine schonende Herstellung der Lackpulver ermöglichen. Hierdurch ergibt sich der weitere Vorteil des erfindungsgemäßen Verfahrens, der darin liegt, daß die Aufbereitung innerhalb der üblichen Pulverlackherstellung erfolgt und keinerlei zusätzlicher Mahleinrichtungen bedarf. Die aus dem kompaktierten Granulat entstehenden Pulverlacke weisen vor dem Sichtungsprozeß einen vergleichbaren Feinanteil auf wie übliche Pulverlacke, er liegt beispielsweise normalerweise unterhalb 25 % Feinanteil, gegebenenfalls auch kleiner 15 %.

Die erfindungsgemäße Arbeitsweise stellt ein Verfahren zur Verfügung, das die Nachteile des bekannten Standes der Technik bei der Wiederaufarbeitung von Feinpulvern und anderen Pulverlackabfällen, insbesondere zusätzliche Erhitzungs- bzw. Aufschmelzschritte, vermeidet. Weiterhin werden die Lagerhaltungen und Förderungen von Feinanteilen aus der Pulverlackherstellung vermieden. Der insbesondere bei der Pulverherstellung im Mahlprozeß anfallende Feinanteil kann nach der erfindungsgemäßen Verfahrenweise durch Kompaktierung und Mahlung in ein qualitativ hochwertiges Pulver aufgearbeitet werden, ohne daß ein Extrusionsschritt erforderlich ist. Sowohl das Kornspektrum des erhaltenen Pulvers als auch die Qualität der aus dem Pulver hergestellten Beschichtungen unterscheiden sich nicht von den üblichen Pulverlacken.

Es ist sogar möglich, Pulverlacke mit einem engeren Kornspektrum und einer kleineren, mittleren Partikelgröße herzustellen, ohne daß große Mengen an Nebenprodukt entsorgt oder mit hohem Aufwand erneut extrudiert werden müssen.

Das erfindungsgemäße Verfahren kann beispielsweise nach folgendem Prinzip durchgeführt werden, das im nachstehenden Beispiel 7 angewendet wird. Das aus dem Pulverherstellungsprozeß stammende Pulverlackgranulat gelangt aus einem Vorratsbehälter in eine Mühle und wird dort zum fertigen Pulverlack vermahlen. Anschließend wird der Pulverlack in einen Zyklon geleitet zur Abtrennung unerwünschter Korngrößen, beispielsweise des Feinanteils. Der fertige Pulverlack wird abgefüllt, während der Feinanteil über einen weiteren Zyklon oder über ein Filter zur Abtrennung vom Abluftstrom in den Kompaktierer (6) gelangt. Nach dem Kompaktierungsprozeß wird das kompaktierte Material aufgebrochen zu einem grobkörnigen Mahlgut und es erfolgt die Rückführung dieses Mahlgutes beispielsweise über eine pneumatische Förderung in den Vorratsbehälter, wo es mit frischem Pulverlackgranulat vermischt und erneut zu Pulverlack vermahlen wird.

Die nachfolgenden Beispiele verdeutlichen die Erfindung. Die Preßkraft der Walzen wird als spezifische Preßkraft pro cm Walzenbreite (kN/cm) angegeben.

### Beispiel 1 (nicht erfindungsgemäß)

18 kg Feinanteil < 10 µm (mittlere Korngröße ca. 4 µm) aus der Mahlung eines üblichen thermisch vernetzbaren weißen Pulverlacks auf Basis Epoxy/Polyester Hybrid (49 % Polyester, 21 % Epoxid, 29 % Titandioxid und 1 % Additive) werden mit Hilfe eines Zwei-Walzenkompaktors der Fa. Bepex unter Einsatz einer oberflächenstrukrurierten Walze mit einem Durchsatz von ca. 25 kg/h mit einer Preßkraft von 8 kN/cm kompaktiert. Der so erhaltene kompaktierte homogene Strang. der mechanisch stabil ist, wurde in einem Brecher in Chips von ca. 2 cm Durchmesser zerkleinert. Diese Chips werden in einer Mühle (Hersteller Hosokava, Typ ACM 2) unter den für Pulverlacke üblichen Bedingungen vermahlen. Man erhält ein Pulver mit einer mittleren Partikelgröße von 45 µm und einem Anteil < 10 µm von < 15 %.

Das Pulver wurde elektrostatisch mit einer Koronapistole auf Aluminiumblech gesprüht und 20 min. bei 180°C eingebrannt. Man erhält eine defektfreie Beschichtung mit Eigenschaften, die sich nicht von einer Beschichtung unterscheiden, die direkt mit dem oben erwähnten nicht kompaktierten Pulverlack erhalten wird.

### Beispiel 2 (nicht erfindungsgemäß)

16 kg Feinanteil < 10 µm (mittlere Korngröße ca. 4 µm) aus der Mahlung eines schwarz eingefärbten thermisch vernetzbaren Pulverlacks auf Basis Epoxid mit Dicyan Vernetzer werden mit Hilfe eines Zwei-Walzenkompaktors der Fa. Bepex unter Einsatz einer oberflächenstrukturierten Walze mit einem Durchsatz von ca. 22 kg/h und einer Preßkraft von 14 kN/cm kompaktiert. Der so erhaltene kompaktierte homogene Strang, der mechanisch stabil ist, wurde in einem Brecher in Chips von ca. 2 cm Durchmesser zerkleinert. Diese Chips werden in einer Mühle (Hersteller Hosokava, Typ ACM 2) unter den für Pulverlacke üblichen Bedingungen vermahlen. Man erhält ein Pulver mit einer mittleren Partikelgröße von 37 µm und einem Anteil < 10 µm von < 14 %.

Das Pulver wurde elektrostatisch mit einer Koronapistole auf Aluminiumblech gesprüht und 20 min. bei 180°C eingebrannt. Man erhält eine defektfreie Beschichtung mit Eigenschaften, die sich nicht von einer Beschichtung mit dem nicht aufgearbeiteten Pulver unterscheiden.

### Beispiel 3

20 kg Feinanteil < 10 µm (mittlere Korngröße ca. 4 µm) aus der Mahlung eines üblichen thermisch vernetzbaren Pulverlacks auf Basis Polyester mit Triglycidylisocyanurat (TGIC) als Vernetzer (55,8 % Polyester, 4,2 % TGIC 29 % Titandioxid und 1 % Additive) werden mit Hilfe eines Zwei-Walzenkompaktors der Fa. Bepex unter Einsatz einer oberflächenstrukturierten Walze mit einem Durchsatz von ca. 20 kg/h mit einer Preßkraft von 20 kN/cm kompaktiert. Der so erhaltene kompaktierte homogene Strang, der mechanisch stabil ist, wurde in einem Brecher in Chips von ca. 2 cm Durchmesser zerkleinert. Diese Chips werden in einer Mühle (Hersteller Hosokava, Typ ACM 2) unter den für Pulverlacke üblichen Bedingungen vermahlen. Man erhält ein Pulver mit einer mittleren Partikelgröße von 27 µm und einem Anteil < 10 µm von < 25 %.

Das Pulver wurde elektrostatisch mit einer Koronapistole auf Aluminiumblech gesprüht und 20 min. bei 180°C eingebrannt. Man erhält eine defektfreie Beschichtung mit Eisenschaften, die sich nicht von einer Beschichtung mit dem nicht kompaktierten Pulverlack unterscheiden.

### Beispiel 4 (nicht erfindungsgemäß)

16 kg Feinanteil < 10 µm (mittlere Korngröße ca. 4 µm) aus der Mahlung eines grau eingefärbten mit Wachs modifizierten thermisch vernetzbaren Pulverlacks auf Basis Epoxid mit Dicyan als Härterkomponente werden mit Hilfe eines Zwei-Walzenkompaktors der Fa. Bepex unter Einsatz einer oberflächenstrukturierten Walze mit einem Durchsatz von ca. 27 kg/h und 16 kN/cm Preßkaft kompaktiert. Der so erhaltene kompaktierte homogene Strang, der mechanisch stabil ist, wurde in einem Brecher in Chips von ca. 2 cm Durchmesser zerkleinert. Diese Chips werden in einer Mühle (Hersteller Hosokava, Typ ACM 2) unter den für Pulverlacke üblichen Bedingungen vermahlen. Man erhält ein Pulver mit einer mittleren Partikelgröße von 36 µm und einem Anteil < 10 µm von < 20 %.

Das Pulver wurde elektrostatisch mit einer Koronapistole auf Aluminiumblech gesprüht und 20 min. bei 180°C eingebrannt. Man erhält eine defektfreie Beschichtung mit Eigenschaften, die sich nicht von einer Beschichtung direkt mit dem Pulverlack unterscheiden.

### Vergleichsbeispiel 1

10 kg Feinanteil analog Beispiel 1 werden in einem Bepex Walzenkompaktor mit Tablettierwalzen in Tabletten mit 10 mm Durchmesser und 3 mm Dicke kompaktiert, der angewandte Kraft der Walzen entspricht 4 kN/cm. Die anschließende Mahlung der Tabletten in einer Mühle (Hersteller Hosokava, Typ ACM 2) ergab ein Pulver mit einer mittleren Partikelgröße von < 10 µm. Dieses Pulver verhält sich wie das eingesetzte Feinmaterial und läßt sich nicht in den üblichen Pulverlackverarbeitungsanlagen verarbeiten.

### Beispiel 5 (nicht erfindungsgemäß)

8 kg Feinanteil aus Beispiel 3 werden mit Hilfe eines Zweiwalzenkompaktors der Fa. Alexanderwerk (Typ WP 50N 75) mit einer Preßkraft von 9 kN/cm Walzenbreite und einem Durchsatz von ca. 80 kg/h zu einem mechanisch stabilen, homogenen Strang verpreßt, der mechanisch grob zerkleinert und anschließend in einer Mühle (Hersteller: Hosokava, Typ ACM2) unter den für Pulverlack üblichen Bedingungen vermahlen wurde. Man erhält ein Pulver mit einer mittleren Partikelgröße von 35 µm und einen Anteil < 10 µm von 19 %.

### Beispiel 6 (nicht erfindungsgemäß)

9 kg Feinanteil aus Beispiel 3 werden mit Hilfe eines Zweiwalzenkompaktors der Fa. Alexanderwerk (Typ WP 50N 75) mit einer Preßkraft von 12 kN/cm Walzenbreite und einem Durchsatz von ca. 50 kg/h zu einem mechanisch stabilen, homogenen Strang verpreßt, der mechanisch grob zerkleinert und anschließend in einer Mühle (Hersteller: Hosokava, Typ ACM2) unter den für Pulverlack üblichen Bedingungen vermahlen wurde. Man erhält ein Pulver mit einer mittleren Partikelgröße von 32 µm und einen Anteil < 10 µm von 15 %.

### Vergleichsbeispiel 2

5 kg Feinanteil aus Beispiel 3 werden mit Hilfe eines Zweiwalzenkompaktors der Fa. Alexanderwerk (Typ WP 50N 75) mit einer Preßkraft von 4 kN/cm Walzenbreite und einem Durchsatz von ca. 100 kg/h zu einem mechanisch stabilen, homogenen Strang verpreßt, der mechanisch grob zerkleinert und anschließend in einer Mühle (Hersteller: Hosokava, Typ ACM2) unter den für Pulverlack üblichen Bedingungen vermählen wurde. Man erhält ein Pulver, daß zu mehr als 40 % aus Partikeln < 10 µm besteht und für den Einsatz als Pulverlack nicht geeignet ist.

### Beispiel 7

In einer Anlage, wie sie vorstehend vor Beispiel 1 beschrieben wird, werden 581 kg frisches Mahlgut eines weiß eingefärbten Pulverlackes auf Basis Epoxid/Polyester 50 : 50 in einer Sichtermühle ACM 20 der Fa. Hosokava vermahlen und in einen Zyklonabschneider zur Abtrennung des Feinanteils geleitet. Der Feinanteil gelangt in einen weiteren Zyklonabschneider und von dort aus in einen Walzenkompaktierer WPN 50N75 der Fa. Alexanderwerke. Nach Brechung des kompaktierten Gutes mittels eines Fingerbrechers wird das erhaltene Produkt rückgeführt zu der Vorlage der Mühle mit Pulverlack der gleichen Charge. Die Betriebsbedingungen der Mühle und der beiden Zyklone werden so gewählt, daß ein Pulverlack mit einer mittleren Korngröße von 28 µm und einem Feinanteil < 10 µm von < 15 % erhalten wird.

Der Kompaktierer wurde mit einer spezifischen Preßkraft von 21,3 kN/cm betrieben. Es werden 555 kg spezifikationsgerechtes Pulver erhalten (96 % Ausbeute.)

### Vergleichsbeispiel 3

In Analogie zu Beispiel 7 wird das gleiche Mahlgut unter identischen Bedingungen, aber ohne Kompaktierung und Rückführung des kompaktierten Gutes vermahlen. Bei Einsatz von 594 kg Mahlgut werden 520 kg spezifikationsgerechtes Pulver erhalten (88 % Ausbeute).

## Patentansprüche

1. Verfahren zur Autbereitung von Pulverlackabfällen zu wiederverwendbaren Pulverlacken durch Kompaktieren der Pulverlackabfälle ohne völliges Aufschmelzen zu einem zusammengesinterten Produkt, **dadurch gekennzeichnet, daß** während der Pulverlackherstellung anfallende Pulverlackreste kontinuierlich abgetrennt, kontinuierlich kompaktiert und das kompaktierte Produkt kontinuierlich gemeinsam mit frischem Mahlgut der gleichen Pulverlack-Charge ohne Extrusionsbehandlung zu einem Pulverlack vermahlen wird.

2. Verfahren nach Anspruch 1, **dadurch gekennzeichnet, daß** das Vermahlen zu einer Partikelgrößenverteilung erfolgt, bei der mindestens 50 Volumenprozent der Pulverlackteilchen eine Partikelgröße von 20 µm bis 45 µm aufweisen mit einem Anteil einer Teilchengröße kleiner 10 µm von ≤ 15 %.

3. Verfahren nach Anspruch 1 und 2, **dadurch gekennzeichnet, daß** die Pulverlackabfälle solche sind, die bei der Herstellung von Pulverlacken als zu feinkörnig anfallen.

4. Verfahren nach einem der Ansprüche 1 bis 3, **dadurch gekennzeichnet, daß** die Kompaktierung durch Zwei-Walzen- oder Ringwalzenpressen erfolgt, wobei die Walzenpressen strukturierte Obertlächen aufweisen können.

5. Verfahren nach einem der Ansprüche 1 bis 4, **dadurch gekennzeichnet, daß** Kompaktiervorrichtungen mit einer spezifischen Preßkraft zwischen 4 kN/cm bis 100 kN/cm verwendet werden.

6. Verfahren nach Anspruch 4, **dadurch gekennzeichnet, daß** die Zwei-Walzen- oder Ringwalzenpressen eine Preßkraft zwischen 5 und 50 kN/cm aufweisen.

7. Verfahren gemäß Anspruch 1 bis 6, **dadurch gekennzeichnet, daß** Pulverlackabfälle mit einem mittleren Durchmesser von < 10 µm kompaktiert werden.

8. Pulverlackzusammensetzung, erhalten nach dem Verfahren eines der Ansprüche 1 bis 7 aus Pulverlackabfällen durch kontinuierliches Kompaktieren und kontinuierliches nachgeschaltetes Vermahlen ohne zusätzliches Aufschmelzen.

## Claims

1. Process for the processing of powder coating waste to obtain reusable powder coatings by compaction of the powder coating waste without full melting to form a baked product, **characterised in that** powder coating residues arising during powder coating manufacture are separated continuously and compacted continuously and the compacted product is ground together continuously with fresh millbase from the same powder coating charge without extrusion treatment to form a powder coating.

2. Process according to claim 1, **characterised in that** the grinding is effected to a particle size distribution in which at least 50 vol.% of the powder coating particles have a particle size of from 20 µm to 45 µm and the proportion having a particle size smaller than 10 µm is ≤ 15%.

3. Process according to claims 1 and 2, **characterised in that** the powder coating waste is that which is excessively fine-grained such as arises in the manufacture of powder coatings.

4. Process according to one of claims 1 to 3, **characterised in that** the compaction is effected by twin-roll or ring-roll presses, wherein the roll presses may have structured surfaces.

5. Process according to one of claims 1 to 4, **characterised in that** compacting devices having a specific compression force of between 4 kN/cm and 100 kN/cm are used.

6. Process according to claim 4, **characterised in that** the twin-roll or ring-roll presses have a compression force of between 5 and 50 kN/cm.

7. Process according to claims 1 to 6, **characterised in that** powder coating waste having an average diameter of < 10 µm is compacted.

8. Powder coating composition obtained by the process of one of claims 1 to 7 from powder coating waste by continuous compaction and continuous downstream grinding without additional melting.

## Revendications

1. Procédé de transformation de résidus de revêtements en poudre, en revêtements en poudre réutilisables par un processus de compactage des résidus de revêtements en poudre, sans fusion complète, transformés en un produit fritté, **caractérisé en ce que** des résidus de revêtements en poudre apparaissant au cours de la production de revêtements en poudre sont séparés en continu, compactés en continu, et le produit compacté est broyé en continu en même temps qu'une matière broyée, fraîchement ajoutée, de la même charge de revêtement en poudre, sans traitement par extrusion, pour former un revêtement en poudre.

2. Procédé selon la revendication 1, **caractérisé en ce que** le broyage est réalisé suivant une répartition granulométrique où au moins 50 pour cent en volume des particules de revêtements en poudre ont une taille de particules comprise entre 20 µm et 45 µm, une partie d'une taille de particules inférieure à 10 µm étant inférieure ou égale à 15 %.

3. Procédé selon la revendication 1 ou 2, **caractérisé en ce que** les résidus de revêtements en poudre sont tels qu'ils se présentent en étant à grains trop fins lors de la fabrication de revêtements en poudre.

4. Procédé selon l'une quelconque des revendications 1 à 3, **caractérisé en ce que** le processus de compactage est réalisé par une presse à deux cylindres ou à cylindres annulaires, où les presses à cylindres peuvent avoir des surfaces structurées.

5. Procédé selon l'une quelconque des revendications 1 à 4, **caractérisé en ce que** des dispositifs de compactage sont utilisés avec une force de pression spécifique comprise entre 4 kN/cm et 100 kN/cm.

6. Procédé selon la revendication 4, **caractérisé en ce que** les presses à deux cylindres ou à cylindres annulaires ont une force de pression comprise entre 5 kN/cm et 50 kN/cm.

7. Procédé selon l'une quelconque des revendications 1 à 6, **caractérisé en ce que** des résidus de revêtements en poudre sont compactés en ayant un diamètre moyen inférieur à 10 µm.

8. Composition de revêtements en poudre obtenue par le procédé selon l'une quelconque des revendications 1 à 7, constituée de résidus de revêtements en poudre et élaborée par un processus de compactage continu et par un processus de broyage continu effectué ensuite, sans fusion supplémentaire.
